# EUROPEAN PATENT SPECIFICATION

(11) **EP 4 570 549 B1**
(45) Date of publication and mention of the grant of the patent: **08.07.2026**
(21) Application number: 23215862.6
(22) Date of filing: 12.12.2023
(51) Int. Cl.: B60K 1/04

(54) **A VEHICLE CHASSIS**
FAHRZEUGRAHMEN
CHÂSSIS DE VÉHICULE

(43) Date of publication of application: 18.06.2025
(73) Proprietor: VOLVO TRUCK CORPORATION, 405 08 Göteborg (SE)
(72) Inventor: Patel, Viralkumar Ambubhai, 560075 BANGALORE (IN); Mohini Laxmikant, Kale, 560048 Bangalore (IN)
(74) Representative: Valea AB

(56) References cited:
- DE-A1- 102020 001 635
- IT-A1- 202100 016 172
- SE-A1- 2 150 247
- US-A1- 2022 097 537
- US-B1- 11 124 076
- US-B2- 11 766 925

## Description

### TECHNICAL FIELD

The disclosure relates generally to a vehicle chassis. In particular aspects, the disclosure relates to a vehicle chassis comprising a first chassis frame rail and a second chassis frame rail. Moreover, the disclosure relates to a vehicle. The disclosure can be applied to heavy-duty vehicles, such as trucks, buses, and construction equipment, among other vehicle types. Although the disclosure may be described with respect to a truck, the disclosure is not restricted to any particular vehicle.

### BACKGROUND

A vehicle may comprise one or more batteries for supplying electric power to a propulsion system that comprises one or more electric motors. The one or more batteries may be suspended from one or more frame rails of the vehicle which may render the one or more batteries exposed to the environment ambient of the vehicle. For instance, during a side collision with e.g. a passenger car or a light pickup truck, the one or more batteries may undergo severe deformation and/or displacement. As such, it would be desired to ensure that batteries are appropriately protected, even in the event of a side collision. A vehicle chassis according to the preamble of claim1 is known from SE2150247

### SUMMARY

According to a first aspect of the disclosure, there is provided a vehicle chassis comprising a first chassis frame rail and a second chassis frame rail. The vehicle chassis has a vehicle chassis longitudinal extension in a vehicle chassis longitudinal direction, a vehicle chassis transversal extension in a vehicle chassis transversal direction and a vehicle chassis vertical extension in a vehicle chassis vertical direction. The vehicle chassis longitudinal direction corresponds to an intended direction of travel of the vehicle chassis when travelling straight ahead. The vehicle chassis vertical direction corresponds to a direction of a normal to a planar surface directly or indirectly supporting the vehicle chassis and the vehicle chassis transversal direction being perpendicular to each one of the vehicle chassis longitudinal direction and the vehicle chassis vertical direction.

A centre plane extends in the vehicle chassis longitudinal direction and in the vehicle chassis vertical direction and is located in a transversal centre of the vehicle chassis. The first chassis frame rail and the second chassis frame rail are located on opposite sides of the centre plane.

The vehicle chassis comprises a first battery pack connected to a first connection portion of the first chassis frame rail whereby a first battery pack lower portion of the first battery pack is located beneath the first connection portion in the vehicle chassis vertical direction.

The vehicle chassis comprises a second battery pack connected to a second connection portion of the second chassis frame rail whereby a second battery pack lower portion of the second battery pack is located beneath the second connection portion in the vehicle chassis vertical direction.

The vehicle chassis comprises a connection arrangement wherein the first battery pack lower portion and the second battery pack lower portion are connected via the connection arrangement. The connection arrangement is located between the first battery pack lower portion and the second battery pack lower portion in the vehicle chassis transversal direction.

The connection arrangement comprises a set of energy absorbing members comprising at least one energy absorbing member, wherein each energy absorbing member in the set of energy absorbing members is adapted to plastically deform to thereby allow a relative movement between the first battery pack lower portion and the second battery pack lower portion in at least the vehicle chassis transversal direction when a load imparted on the energy absorbing member in at least the vehicle chassis transversal direction is equal to or above a predetermined threshold load.

The first aspect of the disclosure may seek to mitigate the risk of the first or the second battery pack being severely deformed during a side collision. A technical benefit may include that the set of energy absorbing members may absorb at least some energy from such a side collision.

Optionally in some examples, including in at least one preferred example, the connection arrangement comprises a load transfer member connected to at least one energy absorbing member in the set of energy absorbing members. A technical benefit may include that the connection arrangement, by virtue of the load transfer member, may transfer a load between the first and second battery packs in the event of a side collision. Such a load transfer may limit the displacement of the first or second battery pack subject to a side impact, thereby limiting the deformation and/or the displacement of the first or second battery pack.

Optionally in some examples, including in at least one preferred example, the set of energy absorbing members comprises a first energy absorbing member and a second energy absorbing member, wherein the connection arrangement comprises, in order in the vehicle chassis transversal direction from the first battery pack lower portion to the second battery pack lower portion: the first energy absorbing member, the load transfer member and the second energy absorbing member. A technical benefit may include that the energy impact capability as well as the load transfer capability of the connection arrangement are obtained in an appropriate manner.

Optionally in some examples, including in at least one preferred example, the load transfer member has a load transfer member stiffness in the vehicle chassis transversal direction and each energy absorbing member in the set of energy absorbing members has an energy absorbing member stiffness in the vehicle chassis transversal direction being smaller than the load transfer member stiffness. A technical benefit may include that the energy impact capability is obtained in an appropriate manner.

Optionally in some examples, including in at least one preferred example, each energy absorbing member in the set of energy absorbing members has an energy absorbing member stiffness in the vehicle chassis transversal direction being less than 0.5, preferably less than 0.2, of the load transfer member stiffness. A technical benefit may include that the energy impact capability is obtained in an appropriate manner.

Optionally in some examples, including in at least one preferred example, the load transfer member comprises or is constituted by a beam, such as a beam with an I-profile. A technical benefit may include that an appropriate load transfer capability is obtained.

Optionally in some examples, including in at least one preferred example, the load transfer member is made of metal, preferably steel. A technical benefit may include that an appropriate load transfer capability is obtained.

Optionally in some examples, including in at least one preferred example, the connection arrangement extends in the vehicle chassis transversal direction. A technical benefit may include that an appropriate load transfer capability is obtained.

Optionally in some examples, including in at least one preferred example, a first battery pack distance, being a largest distance in the vehicle chassis transversal direction from a portion of the first battery pack to the centre plane, is larger than a first connection portion distance, being a largest distance in the vehicle chassis transversal direction from the first connection portion to the centre plane.

Optionally in some examples, including in at least one preferred example, a second battery pack distance, being a largest distance in the vehicle chassis transversal direction from a portion of the second battery pack to the centre plane, is larger than a second connection portion distance, being a largest distance in the vehicle chassis transversal direction from the second connection portion to the centre plane.

Optionally in some examples, including in at least one preferred example, each energy absorbing member in the set of energy absorbing members comprises or is constituted by a crush can. A technical benefit may include that the energy impact capability is obtained in an appropriate manner.

Optionally in some examples, including in at least one preferred example, the crush can comprises an array of hollow cells separated by crush can cell walls, preferably the crush can cell walls form a honeycomb structure. A technical benefit may include that the energy impact capability is obtained in an appropriate manner.

Optionally in some examples, including in at least one preferred example, the crush can comprises a crush can wall enclosing a crush can centre line extending in a crush can centre line direction, the crush can wall having a circumference measure around the crush can centre line and a crush can wall thickness, the crush can wall thickness being less than 10%, preferably less than 5%, more preferred less than 2%, of the circumference measure. A technical benefit may include that the crush can may plastically deform in a controlled manner resulting in that the energy impact capability is obtained in an appropriate manner.

Optionally in some examples, including in at least one preferred example, the crush can wall extends from a crush can start portion to a crush can end portion in the crush can centre line direction wherein the crush can wall has a crush can wall distance from an outer portion of the crush can wall to the crush can centre line in a direction perpendicular to the crush can centre line direction. For at least one cross-section of the crush can wall in a plane extending in the crush can centre line direction, the crush can wall comprises a set of crush can wall crests comprising a least one crush can wall crest, preferably a plurality of crush can wall crests. Each crush can wall crest in the set of crush can wall crests having a larger crush can wall distance than adjacent portions of the crush can wall located on opposite sides of the crush can wall crest in the crush can centre line direction. A technical benefit may include that the crush can may plastically deform in a controlled manner resulting in that the energy impact capability is obtained in an appropriate manner.

Optionally in some examples, including in at least one preferred example, the load transfer member extends in a load transfer member direction. The load transfer member direction and the crush can centre line direction form an angle being less than 10°. A technical benefit may include that the crush can may plastically deform in a controlled manner resulting in that the energy impact capability is obtained in an appropriate manner.

Optionally in some examples, including in at least one preferred example, a first portion of the connection arrangement is connected to the first battery pack lower portion and a second portion of the connection arrangement is connected to the second battery pack lower portion.

Optionally in some examples, including in at least one preferred example, the connection arrangement is located beneath each one of the first connection portion and the second connection portion in the vehicle chassis vertical direction.

Optionally in some examples, including in at least one preferred example, the vehicle chassis comprises a set of connection arrangements comprising at least two connection arrangements, each connection arrangement in the set of connection arrangements being in accordance with any one of above examples, wherein a first connection arrangement and a second connection arrangement in the set of connection arrangements are separated by a distance in the vehicle chassis longitudinal direction.

Optionally in some examples, including in at least one preferred example, the first connection arrangement and the second connection arrangement in the set of connection arrangements are parallel.

According to a second aspect of the disclosure, there is provided a vehicle comprising a vehicle chassis according to the first aspect of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary schematic side view of a vehicle according to an example.
**FIG. 2** is an exemplary schematic top view of a vehicle chassis according to an example.
**FIG. 3** is an exemplary cross-sectional view of a vehicle chassis according to an example.
**FIG. 4** is an exemplary cross-sectional view of a vehicle chassis according to an example.
**FIG. 5** is an exemplary cross-sectional view of a vehicle chassis according to an example.
**FIG. 6 and FIG. 7** illustrate an example of a crush can.
**FIG. 8 and FIG. 9** illustrate an example of a crush can.
**FIG. 10 and FIG. 11** illustrate an example of a crush can.
**FIG. 12** illustrates an example of a connection arrangement.
**FIG. 13** is an exemplary schematic top view of a vehicle chassis according to an example.

### DETAILED DESCRIPTION

The detailed description set forth below provides information and examples of the disclosed technology with sufficient detail to enable those skilled in the art to practice the disclosure.

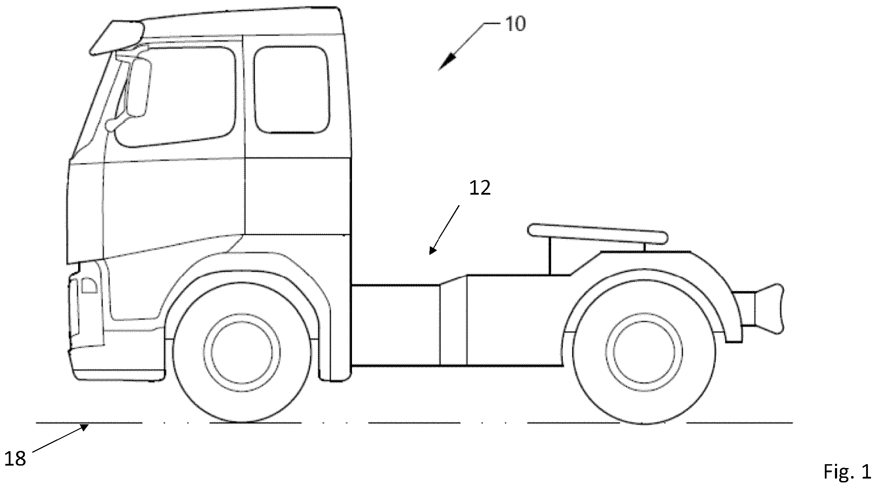

**FIG. 1** illustrates a vehicle 10, in accordance with at least one example of the disclosure. Although the vehicle 10 is illustrated in the form of a truck, other types of vehicles, such as busses, construction equipment, trailers or passenger cars may be provided in accordance with the invention. Moreover, as indicated in **FIG. 1****,** the vehicle 10 comprises a vehicle chassis 12. Purely by way of example, the vehicle chassis 12 may comprise a frame, being the main supporting structure of the vehicle, and at least one component intended to be used for propelling the vehicle 10.

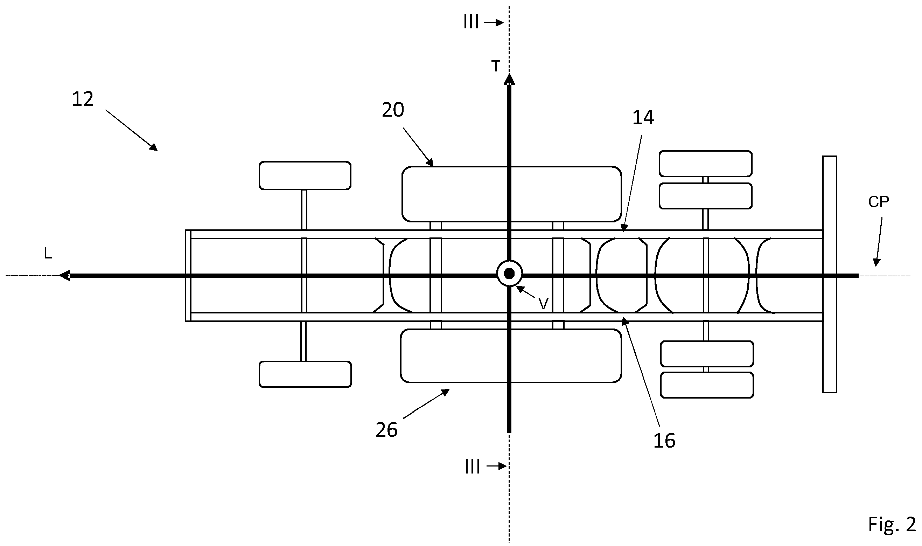

**FIG. 2** illustrates a top view of a vehicle chassis 12. Purely by way of example, the **FIG. 2** vehicle chassis 12 may form part of a vehicle such as a truck or other types of vehicles, such as a bus, construction equipment, a trailer or a passenger car. As a non-limiting example, the **FIG. 2** vehicle chassis 12 may form part of the **FIG. 1** vehicle 10.

As indicated in **FIG. 2****,** the vehicle chassis 12 comprises a first chassis frame rail 14 and a second chassis frame rail 16. Moreover, again with reference to **FIG. 2****,** the vehicle chassis 12 has a vehicle chassis longitudinal extension in a vehicle chassis longitudinal direction L, a vehicle chassis transversal extension in a vehicle chassis transversal direction T and a vehicle chassis vertical extension in a vehicle chassis vertical direction V. As may be gleaned from **FIG. 2****,** the vehicle chassis longitudinal direction L corresponds to an intended direction of travel of the vehicle chassis 12 when travelling straight ahead.

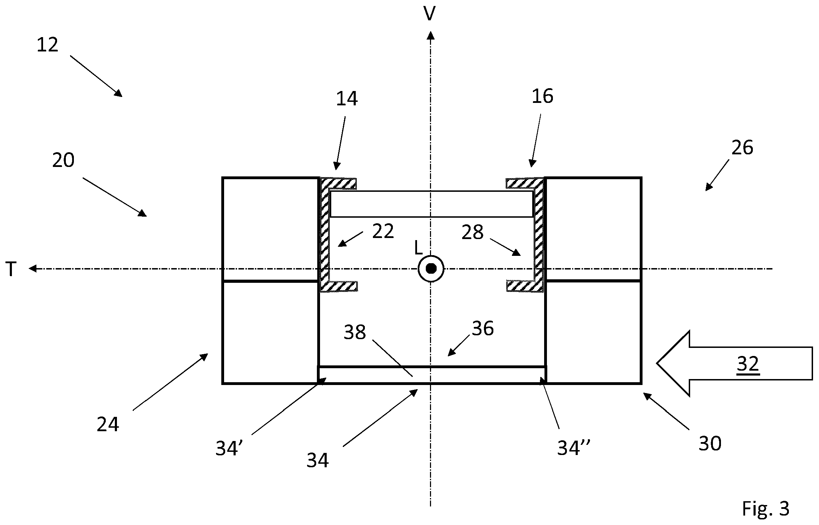

Moreover, again with reference to **FIG. 2****,** the vehicle chassis vertical direction V corresponds to a direction of a normal to a planar surface 18 (see **FIG. 1****)** directly or indirectly supporting the vehicle chassis 12. Finally, the vehicle chassis transversal direction T is perpendicular to each one of the vehicle chassis longitudinal direction L and the vehicle chassis vertical direction V. Moreover, **FIG. 3** illustrates a cross-section of the **FIG. 2** vehicle chassis 12 as seen in a plane extending in the vehicle chassis transversal direction T and the vehicle chassis vertical direction V.

As indicated in **FIG. 2****,** a centre plane CP extends in the vehicle chassis longitudinal direction L and in the vehicle chassis vertical direction V and is located in a transversal centre of the vehicle chassis 12. The first chassis frame rail 14 and the second chassis frame rail 16 are located on opposite sides of the centre plane CP.

As illustrated in **FIG. 2****,** the vehicle chassis 12 comprises a first battery pack 20 connected to a first connection portion 22 (see **FIG. 3****)** of the first chassis frame rail 14 whereby a first battery pack lower portion 24 (see **FIG. 3****)** of the first battery pack 20 is located beneath the first connection portion 22 in the vehicle chassis vertical direction V.

In a similar vein, and with reference to **FIG. 2** and **FIG. 3****,** the vehicle chassis 12 comprises a second battery pack 26 connected to a second connection portion 28 (see **FIG. 3****)** of the second chassis frame rail 16 whereby a second battery pack lower portion 30 (see **FIG. 3****)** of the second battery pack 26 is located beneath the second connection portion 28 in the vehicle chassis vertical direction V.

As a non-limiting example, each one of the first battery pack 20 and the second battery pack 26 may be adapted to supply electric energy to a propulsion assembly (not shown) which for instance may comprise one or more electric motors (not shown) of the vehicle chassis 12 of the vehicle 10. Moreover, again by way of example only, each one of the first battery pack 20 and the second battery pack 26 may comprise a housing (not shown) accommodating one or more battery modules (now shown) and/or one or more battery cells (not shown).

**FIG. 3** also illustrates that one of the battery packs 20, 26, may be subject to a side impact load, indicated by arrow 32 in **FIG. 3****,** in the event that the vehicle 10 of which the vehicle chassis 12 forms part is subject to a side collision. In the **FIG. 3** example, the second battery pack 26 is used as an example of a battery pack subjected to a side impact load but the below reasoning also applies for the first battery pack 20. As a non-limiting example, such as side collision may involve that a passenger car (not shown) or the like impacts the vehicle 10 from the side. Such a side impact load 32 may result in an undesired deformation and/or displacement of a battery pack, such as the second battery pack 26 in the **FIG. 3** example.

In order to mitigate the consequence of a side impact, and as indicated in **FIG. 3****,** the vehicle chassis 12 comprises a connection arrangement 34 wherein the first battery pack lower portion 24 and the second battery pack lower portion 30 are connected via the connection arrangement 34. Moreover, as illustrated in **FIG. 3****,** the connection arrangement 34 is located between the first battery pack lower portion 24 and the second battery pack lower portion 30 in the vehicle chassis transversal direction T. Purely by way of example, and as indicated in **FIG. 3****,** the connection arrangement 34 may extend in the vehicle chassis transversal direction T. As such, though again by way of example only, the extension of the connection arrangement 34 may be parallel to the extension of the vehicle chassis transversal direction T.

Moreover, as indicated in **FIG. 3****,** the connection arrangement 34 comprises a set of energy absorbing members 36 comprising at least one energy absorbing member 38. Each energy absorbing member 38 in the set of energy absorbing members is adapted to plastically deform to thereby allow a relative movement between first battery pack lower portion 24 and the second battery pack lower portion 30 in at least the vehicle chassis transversal direction T when a load imparted on the energy absorbing member 38 in at least the vehicle chassis transversal direction T is equal to or above a predetermined threshold load.

As such, in the event that e.g. the second battery pack 26 is subject to a side impact load 32 as exemplified in **FIG. 3****,** at least a portion of the energy emanating from the side impact load 32 will be absorbed by the set of energy absorbing members 36. This in turn implies that the deformation and/or displacement of the second battery pack 26 may be kept appropriately low in the event of a side collision.

Moreover, as a non-limiting example indicated in **FIG. 3****,** a first portion 34' of the connection arrangement 34 may be connected to the first battery pack lower portion 24 and a second portion 34" of the connection arrangement 34 is connected to the second battery pack lower portion 30. As a non-limiting example, the first portion 34' of the connection arrangement 34 may be connected to the first battery pack lower portion 24 by means of a joint such as a weld joint (not shown), bolt joint (not shown) or the like. In a similar vein, by way of example only, the second portion 34" of the connection arrangement 34 may be connected to the second battery pack lower portion 30 by means of a joint such as a weld joint (not shown), bolt joint (not shown) or the like.

Furthermore, as exemplified in **FIG. 3****,** the connection arrangement 34 may be located beneath each one of the first connection portion 22 and the second connection portion 28 in the vehicle chassis vertical direction V.

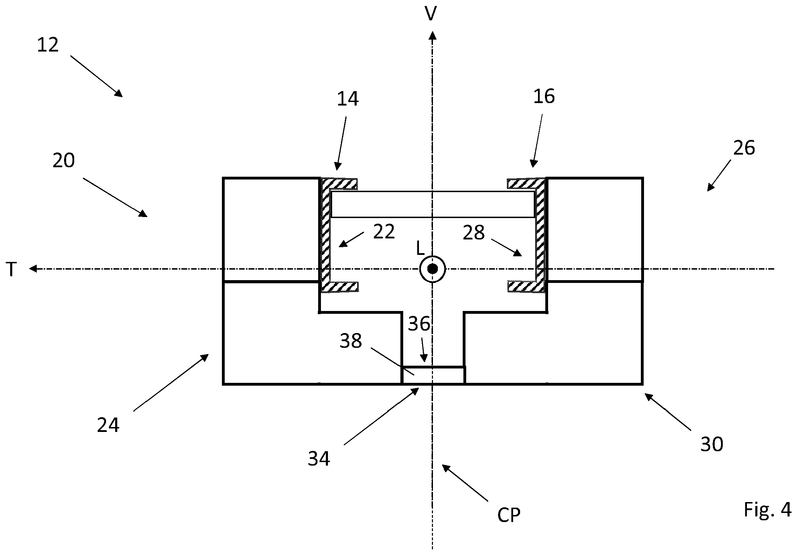

It should be noted that in some examples of the present disclosure, the connection arrangement 34 needs only comprise an energy absorbing member 38. To this end, reference is made to **FIG. 4** illustrating and example in which the distance between the first battery pack lower portion 24 and the second battery pack lower portion 30 in the vehicle chassis transversal direction T is relatively small such that it may suffice to use a single energy absorbing member 38 to connect the first battery pack lower portion 24 and the second battery pack lower portion 30.

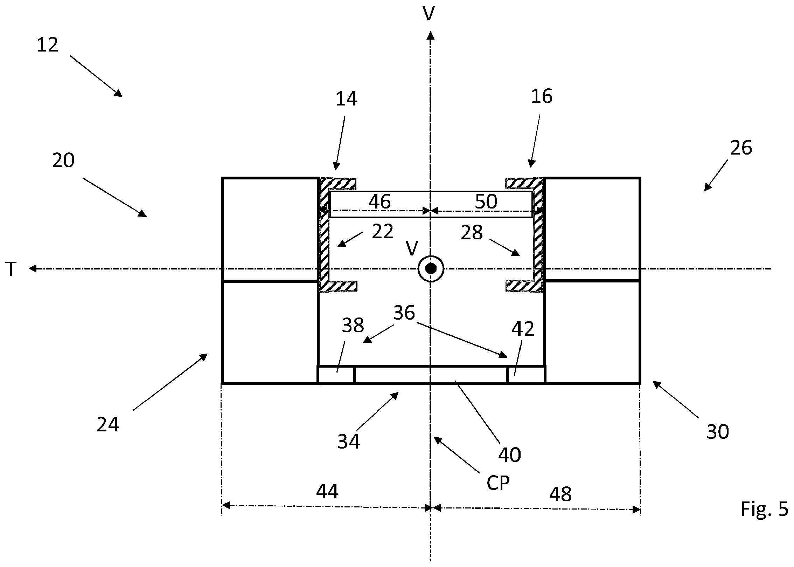

However, reference is made to **FIG. 5****,** illustrating another example of the vehicle chassis 12 in which the connection arrangement 34 comprises a load transfer member 40 connected to at least one energy absorbing member 38 in the set of energy absorbing members 36. The load transfer member 40 may be adapted to transfer a load between the first battery pack 20 and the second battery pack 26. Such a load transfer may limit the displacement of the first or second battery pack 20, 26 subject to a side impact, thereby limiting the deformation of the first or second battery pack 20, 26.

Purely by way of example, and as exemplified in **FIG. 5****,** the set of energy absorbing members 36 may comprise a first energy absorbing member 38 and a second energy absorbing member 42. Moreover, as indicated in **FIG. 5****,** the connection arrangement 34 may comprise, in order in the vehicle chassis transversal direction T from the first battery pack lower portion 24 to the second battery pack lower portion 30: the first energy absorbing member 38, the load transfer member 40 and the second energy absorbing member 42. Such a configuration implies that the energy impact capability as well as the load transfer capability of the connection arrangement 34 are obtained in an appropriate manner.

Purely by way of example, the load transfer member 40 has a load transfer member stiffness in the vehicle chassis transversal direction T and each energy absorbing member 38, 42 in the set of energy absorbing members 36 has an energy absorbing member stiffness in the vehicle chassis transversal direction T being smaller than the load transfer member stiffness. As non-limiting examples, each energy absorbing member 38, 42 in the set of energy absorbing members 36 may have an energy absorbing member stiffness in the vehicle chassis transversal direction T being less than 0.5, preferably less than 0.2, of the load transfer member stiffness.

Moreover, by way of example only and as illustrated in **FIG. 5****,** a first battery pack distance 44, being a largest distance in the vehicle chassis transversal direction T from a portion of the first battery pack 20 to the centre plane CP, is larger than a first connection portion distance 46, being a largest distance in the vehicle chassis transversal direction T from the first connection portion 22 to the centre plane CP. Put differently, the first battery pack 20 is connected to the first connection portion 22 such that at least a portion of the first battery pack 20 is located outside the first connection portion 22 in the vehicle chassis transversal direction T.

In a similar vein, though again by way of example only and as illustrated in **FIG. 5****,** a second battery pack distance 48, being a largest distance in the vehicle chassis transversal direction T from a portion of the second battery pack 26 to the centre plane CP, is larger than a second connection portion distance 50, being a largest distance in the vehicle chassis transversal direction T from the second connection portion 28 to the centre plane CP. Put differently, the second battery pack 26 is connected to the second connection portion 28 such that at least a portion of the second battery pack 26 is located outside the second connection portion 28 in the vehicle chassis transversal direction T.

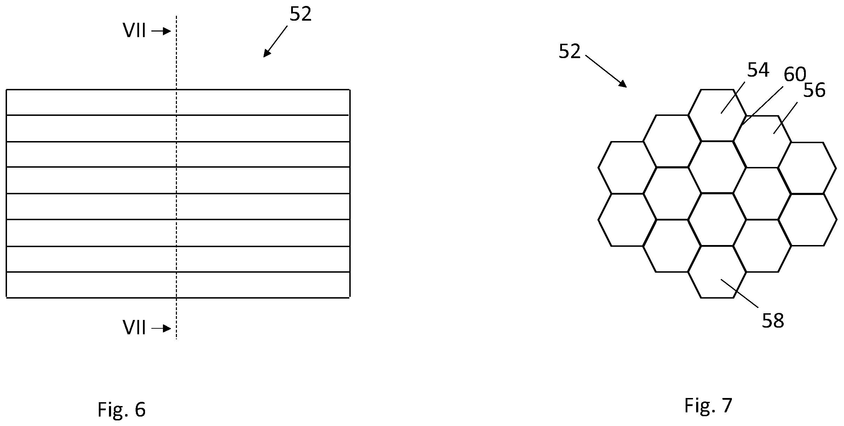

Irrespective of the implementation of the connection arrangement 34, in some examples, each energy absorbing member in the set of energy absorbing members comprises or is constituted by a crush can. Examples of crush cans are presented hereinbelow with reference to **FIG. 6** - **FIG. 9****.**

To this end, **FIG. 6** and **FIG. 7** illustrate an example of a crush can 52 that comprises an array of hollow cells 54, 56, 58 separated by crush can cell walls 60. Purely by way of example, and as indicated in **FIG. 7****,** being a cross-section in plane VII - VII in **FIG. 6****,** the crush can cell wall 60 may form a honeycomb structure. As such, each hollow cell 54, 56, 58 may have a hexagonal cross section, see **FIG. 7****.** Purely by way of example, the crush can cell walls 60 may be made of steel having a yield strength in the range of 250-350 MPa. As non-limiting examples, the steel may be a low carbon or medium carbon steel.

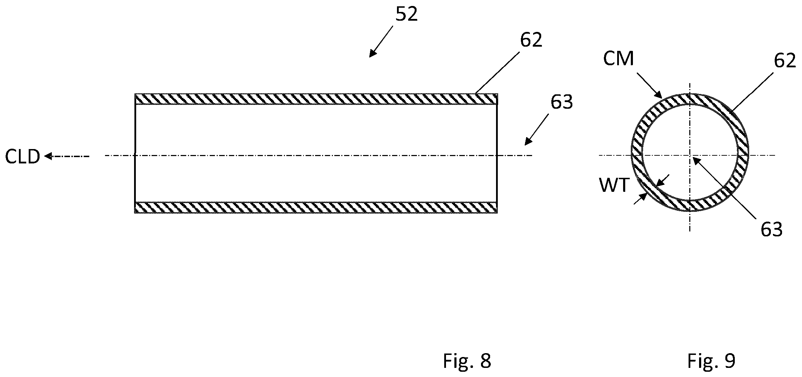

As another non-limiting example, as indicated in **FIG. 8** and **FIG. 9****,** the crush can 52 may comprise a crush can wall 62 enclosing a crush can centre line 63 extending in a crush can centre line direction CLD. Moreover, as indicated in **FIG. 9****,** the crush can wall has a circumference measure CM around the crush can centre line 63 and a crush can wall thickness CT. The crush can wall thickness may as a non-limiting example be less than 10%, preferably less than 5%, more preferred less than 2%, of the circumference measure CM. Purely by way of example, the crush can wall 62 may be made of steel having a yield strength in the range of 250-350 MPa. As non-limiting examples, the steel may be a low carbon or medium carbon steel.

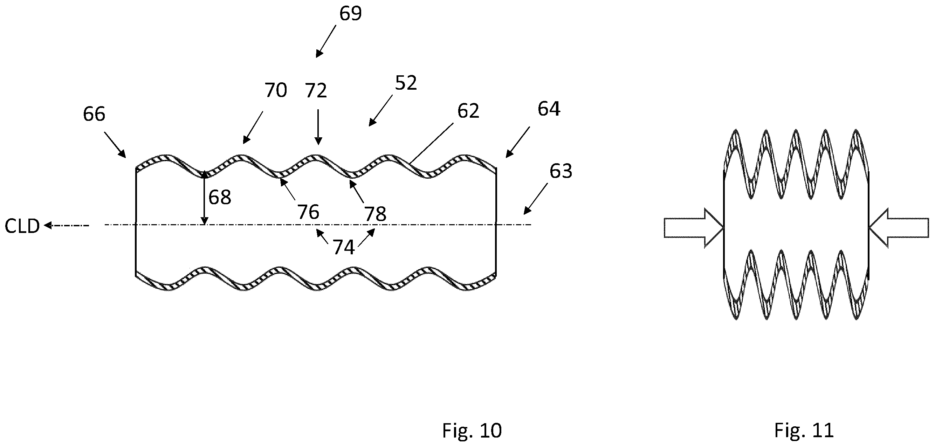

As another non-limiting example, as indicated in **FIG. 10** the crush can wall 64 may extend from a crush can start portion 64 to a crush can end portion 66 in the crush can centre line direction CLD wherein the crush can wall 64 has a crush can wall distance 68 from an outer portion of the crush can 62 wall to the crush can centre line 63 in a direction perpendicular to the crush can centre line direction CLD. Moreover, as indicated in **FIG. 10****,** for at least one cross-section of the crush can wall in a plane extending in the crush can centre line direction CLD, the crush can wall 62 comprises a set of crush can wall crests 69 comprising a least one crush can wall crest 70, 72, preferably a plurality of crush can wall crests. In the **FIG. 10****,** though purely by way of example, the set of crush can wall crests 69 comprises five crush can wall crests.

Irrespective of the number of crush can wall crests in the set of crush can wall crests 69, each crush can wall crest 70, 72, in the set of crush can wall crests 69 has a larger crush can wall distance 68 than adjacent portions of the crush can wall 62 located on opposite sides of the crush can wall crest 70, 72 in the crush can centre line direction CLD. Put differently, for at least one cross-section of the crush can wall in a plane extending in the crush can centre line direction CLD, the crush can wall 62 comprises a set of crush can wall troughs 74, wherein a crush can wall trough 76, 78 is located between adjacent crush can wall crest 70, 72, as seen in the crush can centre line direction CLD. Purely by way of example, the crush can wall 62 may be made of steel having a yield strength in the range of 250-350 MPa. As non-limiting examples, the steel may be a low carbon or medium carbon steel.

As may be realized from **FIG. 10** and **FIG. 11****,** the crush can wall crest 70, 72 implies that the crush can 52 may be plastically deformed in a controlled manner when imparted a load above a certain threshold load.

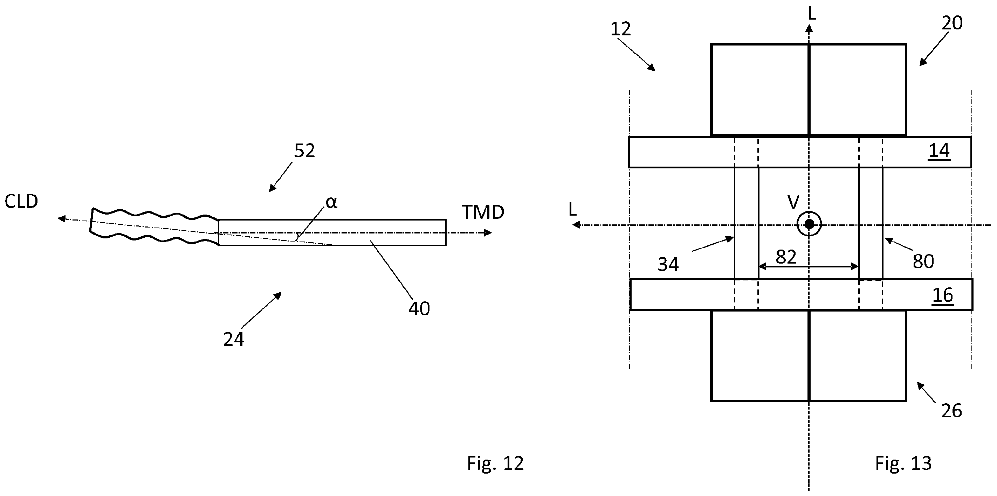

Irrespective of the implementation of the crush can 52, as indicated in **FIG. 12****,** the load transfer member may extend in a load transfer member direction TMD. The load transfer member direction TMD and the crush can centre line direction CLD may form an angle α being less than 10°. Preferably, the load transfer member direction TMD and the crush can centre line direction CLD are parallel and/or coaxial.

Moreover, irrespective of the implementation of the crush can 52, the load transfer member may preferably comprise or be constituted by a beam, such as a beam with an I-profile, in order to ensure a relatively high load transfer capability. As a non-limiting example, the load transfer member 40 may be made of metal, preferably steel.

Finally, **FIG. 13** is a schematic top view of a portion of an example of a vehicle chassis 12. As indicated in the **FIG. 13** example, the vehicle chassis 12 comprises a set of connection arrangements comprising at least two connection arrangements 34, 80, each connection arrangement 34, 80 is in accordance with the first aspect of the disclosure, for instance in accordance with any one of the examples of the first aspect of the disclosure presented hereinabove. A first connection arrangement 34 and a second connection arrangement 80 in the set of connection arrangements are separated by a distance 82 in the vehicle chassis longitudinal direction L. As a non-limiting example, and as indicated in **FIG. 13****,** the first connection arrangement 34 and the second connection arrangement 80 in the set of connection arrangements may be parallel.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

The terminology used herein is for the purpose of describing particular aspects only and is not intended to be limiting of the disclosure. As used herein, the singular forms "a", "an", and "the" are intended to include the plural forms as well, unless the context clearly indicates otherwise. As used herein, the term "and/or" includes any and all combinations of one or more of the associated listed items. It will be further understood that the terms "comprises", "comprising", "includes", and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Examples of the present disclosure are presented hereinbelow.

Example 1. A vehicle chassis 12 comprising a first chassis frame rail 14 and a second chassis frame rail 16, the vehicle chassis 12 having a vehicle chassis longitudinal extension in a vehicle chassis longitudinal direction L, a vehicle chassis transversal extension in a vehicle chassis transversal direction T and a vehicle chassis vertical extension in a vehicle chassis vertical direction V, the vehicle chassis longitudinal direction L corresponding to an intended direction of travel of the vehicle chassis 12 when travelling straight ahead, the vehicle chassis vertical direction V corresponding to a direction of a normal to a planar surface 18 directly or indirectly supporting the vehicle chassis 12 and the vehicle chassis transversal direction T being perpendicular to each one of the vehicle chassis longitudinal direction L and the vehicle chassis vertical direction V, a centre plane CP extends in the vehicle chassis longitudinal direction L and in the vehicle chassis vertical direction V and being located in a transversal centre of the vehicle chassis 12, wherein the first chassis frame rail 14 and the second chassis frame rail 16 are located on opposite sides of the centre plane CP, the vehicle chassis 12 comprising a first battery pack 20 connected to a first connection portion 22 of the first chassis frame rail 14 whereby a first battery pack lower portion 24 of the first battery pack 20 is located beneath the first connection portion 22 in the vehicle chassis vertical direction V; the vehicle chassis 12 comprising a second battery pack 26 connected to a second connection portion 28 of the second chassis frame rail 16 whereby a second battery pack lower portion 30 of the second battery pack 26 is located beneath the second connection portion 28 in the vehicle chassis vertical direction V; the vehicle chassis 12 comprising a connection arrangement 34 wherein the first battery pack lower portion 24 and the second battery pack lower portion 30 are connected via the connection arrangement 34, the connection arrangement 34 being located between the first battery pack lower portion 24 and the second battery pack lower portion 30 in the vehicle chassis transversal direction T; wherein the connection arrangement 34 comprises a set of energy absorbing members 36 comprising at least one energy absorbing member 38, 42, wherein each energy absorbing member 38, 42 in the set of energy absorbing members 36 is adapted to plastically deform to thereby allow a relative movement between first battery pack lower portion 24 and the second battery pack lower portion 30 in at least the vehicle chassis transversal direction T when a load imparted on the energy absorbing member 38, 42 in at least the vehicle chassis transversal direction T is equal to or above a predetermined threshold load.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present invention is not limited to the aspects described above and illustrated in the drawings; rather, the skilled person will recognize that many changes and modifications may be made within the scope of the appended claims. In the drawings and specification, there have been disclosed aspects for purposes of illustration only and not for purposes of limitation, the scope of the invention being set forth in the following claims.

## Claims

1. A vehicle chassis (12) comprising a first chassis frame rail (14) and a second chassis frame rail (16),
said vehicle chassis (12) having a vehicle chassis longitudinal extension in a vehicle chassis longitudinal direction (L), a vehicle chassis transversal extension in a vehicle chassis transversal direction (T) and a vehicle chassis vertical extension in a vehicle chassis vertical direction (V), said vehicle chassis longitudinal direction (L) corresponding to an intended direction of travel of said vehicle chassis (12) when travelling straight ahead, said vehicle chassis vertical direction (V) corresponding to a direction of a normal to a planar surface (18) directly or indirectly supporting said vehicle chassis (12) and said vehicle chassis transversal direction (T) being perpendicular to each one of said vehicle chassis longitudinal direction (L) and said vehicle chassis vertical direction (V), a centre plane (CP) extends in said vehicle chassis longitudinal direction (L) and in said vehicle chassis vertical direction (V) and being located in a transversal centre of said vehicle chassis (12), wherein said first chassis frame rail (14) and said second chassis frame rail (16) are located on opposite sides of said centre plane (CP),
said vehicle chassis (12) comprising a first battery pack (20) connected to a first connection portion (22) of said first chassis frame rail (14) whereby a first battery pack lower portion (24) of said first battery pack (20) is located beneath said first connection portion (22) in said vehicle chassis vertical direction (V);
said vehicle chassis (12) comprising a second battery pack (26) connected to a second connection portion (28) of said second chassis frame rail (16) whereby a second battery pack lower portion (30) of said second battery pack (26) is located beneath said second connection portion (28) in said vehicle chassis vertical direction (V);
said vehicle chassis (12) comprising a connection arrangement (34) wherein said first battery pack lower portion (24) and said second battery pack lower portion (30) are connected via said connection arrangement (34), said connection arrangement (34) being located between said first battery pack lower portion (24) and said second battery pack lower portion (30) in said vehicle chassis transversal direction (T);
**characterized in that**
said connection arrangement (34) comprises a set of energy absorbing members (36) comprising at least one energy absorbing member (38, 42), wherein each energy absorbing member (38, 42) in said set of energy absorbing members (36) is adapted to plastically deform to thereby allow a relative movement between first battery pack lower portion (24) and said second battery pack lower portion (30) in at least said vehicle chassis transversal direction (T) when a load imparted on said energy absorbing member (38, 42) in at least said vehicle chassis transversal direction (T) is equal to or above a predetermined threshold load.

2. The vehicle chassis (12) according to claim 1, wherein said connection arrangement (34) comprises a load transfer member (40) connected to at least one energy absorbing member (38, 42) in said set of energy absorbing members (36).

3. The vehicle chassis (12) according to claim 2, wherein said set of energy absorbing members (36) comprises a first energy absorbing member (38) and a second energy absorbing member (42), wherein said connection arrangement (34) comprises, in order in said vehicle chassis transversal direction (T) from said first battery pack lower portion (24) to said second battery pack lower portion (30): said first energy absorbing member (38), said load transfer member (40) and said second energy absorbing member (40).

4. The vehicle chassis (12) according to any one of claims 2 -3, wherein said load transfer member (40) has a load transfer member stiffness in said vehicle chassis transversal direction (T) and each energy absorbing member (38, 42) in said set of energy absorbing members (36) has an energy absorbing member stiffness in said vehicle chassis transversal direction (T) being smaller than said load transfer member stiffness.

5. The vehicle chassis (12) according to any one of the preceding claims, wherein a first battery pack distance (44), being a largest distance in said vehicle chassis transversal direction (T) from a portion of said first battery pack (20) to said centre plane (CP), is larger than a first connection portion distance (46), being a largest distance in said vehicle chassis transversal direction (T) from said first connection portion (22) to said centre plane (CP).

6. The vehicle chassis (12) according to any one of the preceding claims, wherein a second battery pack distance (48), being a largest distance in said vehicle chassis transversal direction (T) from a portion of said second battery pack (26) to said centre plane (CP), is larger than a second connection portion distance (50), being a largest distance in said vehicle chassis transversal direction (T) from said second connection portion (28) to said centre plane (CP).

7. The vehicle chassis (12) according to any one of the preceding claims, wherein each energy absorbing member (38, 42) in said set of energy absorbing members (36) comprises or is constituted by a crush can (52).

8. The vehicle chassis (12) according to claim 7, wherein said crush can (52) comprises an array of hollow cells (54, 56, 58) separated by crush can cell walls (60), preferably said crush can cell walls (60) form a honeycomb structure.

9. The vehicle chassis (12) according to claim 7 or claim 8, wherein said crush can (52) comprises a crush can wall (62) enclosing a crush can centre line (63) extending in a crush can centre line direction (CLD), said crush can wall having a circumference measure (CM) around said crush can centre line and a crush can wall thickness (CT), said crush can wall thickness (CT) being less than 10%, preferably less than 5%, more preferred less than 2%, of said circumference measure (CM).

10. The vehicle chassis (12) according to claim 9, wherein said crush can wall (62) extends from a crush can start portion (64) to a crush can end portion (66) in said crush can centre line direction (CLD) wherein said crush can wall (62) has a crush can wall distance (68) from an outer portion of said crush can wall (62) to said crush can centre line (63) in a direction perpendicular to said crush can centre line direction (CLD), wherein, for at least one cross-section of said crush can wall in a plane extending in said crush can centre line direction (63), said crush can wall (62) comprises a set of crush can wall crests (69) comprising a least one crush can wall crest (70, 72), preferably a plurality of crush can wall crests (70, 72), each crush can wall crest (70, 72) in said set of crush can wall crests (69) having a larger crush can wall distance (68) than adjacent portions of said crush can wall (62) located on opposite sides of said crush can wall crest (70, 72) in said crush can centre line direction (CLD).

11. The vehicle chassis (12) according to claim 9 or claim 10, when dependent on claim 2, wherein said load transfer member (40) extends in a load transfer member direction (TMD), said load transfer member direction (TMD) and said crush can centre line direction (CLD) form an angle being less than 10°.

12. The vehicle chassis (12) according to any one of the preceding claims, wherein a first portion (34') of said connection arrangement (34) is connected to said first battery pack lower portion (24) and a second portion (34") of said connection arrangement (34) is connected to said second battery pack lower portion (30).

13. The vehicle chassis (12) according to any one of the preceding claims, wherein said connection arrangement (34) is located beneath each one of said first connection portion (22) and said second connection portion (28) in said vehicle chassis vertical direction (V).

14. The vehicle chassis (12) according to any one of the preceding claims, comprising a set of connection arrangements comprising at least two connection arrangements (34, 80), each connection arrangement (34, 80) in said set of connection arrangements being in accordance with any one of the preceding claims, wherein a first connection arrangement (34) and a second connection arrangement (80) in said set of connection arrangements are separated by a distance (82) in said vehicle chassis longitudinal direction (L).

15. A vehicle (10) comprising a vehicle chassis (12) according to any one of the preceding claims.

## Patentansprüche

1. Fahrzeugchassis (12), umfassend eine erste Chassisrahmenschiene (14) und eine zweite Chassisrahmenschiene (16),
wobei das Fahrzeugchassis (12) eine Fahrzeugchassislängserstreckung in einer Fahrzeugchassislängsrichtung (L), eine Fahrzeugchassisquererstreckung in einer Fahrzeugchassisquerrichtung (T) und eine Fahrzeugchassisvertikalerstreckung in einer Fahrzeugchassisvertikalrichtung (V) aufweist, wobei die Fahrzeugchassislängsrichtung (L) einer beabsichtigten Fahrtrichtung von dem Fahrzeugchassis (12) bei einem Geradeausfahren entspricht, die Fahrzeugchassisvertikalrichtung (V) einer Richtung einer Normalen zu einer planaren Oberfläche (18) entspricht, die das Fahrzeugchassis (12) direkt oder indirekt trägt, und die Fahrzeugchassisquerrichtung (T) senkrecht zu jeder von der Fahrzeugchassislängsrichtung (L) und der Fahrzeugchassisvertikalrichtung (V) ist, wobei sich eine Mittelebene (CP) in der Fahrzeugchassislängsrichtung (L) und in der Fahrzeugchassisvertikalrichtung (V) erstreckt und in einem Quermittelpunkt von dem Fahrzeugchassis (12) angeordnet ist, wobei die erste Chassisrahmenschiene (14) und die zweite Chassisrahmenschiene (16) auf gegenüberliegenden Seiten von der Mittelebene (CP) angeordnet sind,
das Fahrzeugchassis (12) umfassend ein erstes Batteriepack (20), das mit einem ersten Verbindungsabschnitt (22) der ersten Chassisrahmenschiene (14) verbunden ist, wobei ein erster unterer Batteriepackabschnitt (24) des ersten Batteriepacks (20) unterhalb des ersten Verbindungsabschnitts (22) in der Fahrzeugchassisvertikalrichtung (V) angeordnet ist;
das Fahrzeugchassis (12) umfassend ein zweites Batteriepack (26), das mit einem zweiten Verbindungsabschnitt (28) der zweiten Chassisrahmenschiene (16) verbunden ist, wobei ein zweiter unterer Batteriepackabschnitt (30) des zweiten Batteriepacks (26) unterhalb des zweiten Verbindungsabschnitts (28) in der Fahrzeugchassisvertikalrichtung (V) angeordnet ist;
das Fahrzeugchassis (12) umfassend eine Verbindungseinrichtung (34), wobei der erste untere Batteriepackabschnitt (24) und der zweite untere Batteriepackabschnitt (30) über die Verbindungseinrichtung (34) verbunden sind, wobei die Verbindungseinrichtung (34) zwischen dem ersten unteren Batteriepackabschnitt (24) und dem zweiten unteren Batteriepackabschnitt (30) in der Fahrzeugchassisquerrichtung (T) angeordnet ist;
**dadurch gekennzeichnet, dass**
die Verbindungseinrichtung (34) einen Satz von energieabsorbierenden Elementen (36) umfasst, umfassend mindestens ein energieabsorbierendes Element (38, 42), wobei jedes energieabsorbierende Element (38, 42) in dem Satz von energieabsorbierenden Elementen (36) angepasst ist, um sich plastisch zu verformen, um dadurch eine Relativbewegung zwischen dem ersten unteren Batteriepackabschnitt (24) und dem zweiten unteren Batteriepackabschnitt (30) in mindestens der Fahrzeugchassisquerrichtung (T) zu ermöglichen, wenn eine Last, die auf das energieabsorbierende Element (38, 42) in mindestens der Fahrzeugchassisquerrichtung (T) aufgebracht wird, gleich oder größer als eine vorbestimmte Schwellenlast ist.

2. Fahrzeugchassis (12) nach Anspruch 1, wobei die Verbindungseinrichtung (34) ein Lastübertragungselement (40) umfasst, das mit mindestens einem energieabsorbierenden Element (38, 42) in dem Satz von energieabsorbierenden Elementen (36) verbunden ist.

3. Fahrzeugchassis (12) nach Anspruch 2, wobei der Satz von energieabsorbierenden Elementen (36) ein erstes energieabsorbierendes Element (38) und ein zweites energieabsorbierendes Element (42) umfasst, wobei die Verbindungseinrichtung (34) in Reihenfolge in der Fahrzeugchassisquerrichtung (T) von dem ersten unteren Batteriepackabschnitt (24) zu dem zweiten unteren Batteriepackabschnitt (30) umfasst: das erste energieabsorbierende Element (38), das Lastübertragungselement (40) und das zweite energieabsorbierende Element (40).

4. Fahrzeugchassis (12) nach einem der Ansprüche 2 bis 3, wobei das Lastübertragungselement (40) eine Lastübertragungselementsteifigkeit in der Fahrzeugchassisquerrichtung (T) aufweist und jedes energieabsorbierende Element (38, 42) in dem Satz von energieabsorbierenden Elementen (36) eine Steifigkeit des energieabsorbierenden Elements in der Fahrzeugchassisquerrichtung (T) aufweist, die geringer als die Lastübertragungselementsteifigkeit ist.

5. Fahrzeugchassis (12) nach einem der vorstehenden Ansprüche, wobei ein erster Batteriepackabstand (44), der ein größter Abstand in der Fahrzeugchassisquerrichtung (T) von einem Abschnitt des ersten Batteriepacks (20) zu der Mittelebene (CP) ist, größer als ein erster Verbindungsabschnittsabstand (46) ist, der ein größter Abstand in der Fahrzeugchassisquerrichtung (T) von dem ersten Verbindungsabschnitt (22) zu der Mittelebene (CP) ist.

6. Fahrzeugchassis (12) nach einem der vorstehenden Ansprüche, wobei ein zweiter Batteriepackabstand (48), der ein größter Abstand in der Fahrzeugchassisquerrichtung (T) von einem Abschnitt des zweiten Batteriepacks (26) zu der Mittelebene (CP) ist, größer als ein zweiter Verbindungsabschnittsabstand (50) ist, der ein größter Abstand in der Fahrzeugchassisquerrichtung (T) von dem zweiten Verbindungsabschnitt (28) zu der Mittelebene (CP) ist.

7. Fahrzeugchassis (12) nach einem der vorstehenden Ansprüche, wobei jedes energieabsorbierende Element (38, 42) in dem Satz von energieabsorbierenden Elementen (36) eine Knautschdose (52) umfasst oder aus dieser besteht.

8. Fahrzeugchassis (12) nach Anspruch 7, wobei die Knautschdose (52) ein Array von hohlen Zellen (54, 56, 58) umfasst, die durch Knautschdosenzellwände (60) getrennt sind, vorzugsweise die Knautschdosenzellwände (60) eine Wabenstruktur ausbilden.

9. Fahrzeugchassis (12) nach Anspruch 7 oder 8, wobei die Knautschdose (52) eine Knautschdosenwand (62) umfasst, die eine Knautschdosenmittellinie (63) umschließt, die sich in einer Knautschdosenmittellinienrichtung (CLD) erstreckt, wobei die Knautschdosenwand ein Umfangsmaß (CM) um die Knautschdosenmittellinie und eine Knautschdosenwandstärke (CT) herum aufweist, wobei die Knautschdosenwandstärke (CT) weniger als 10 %, vorzugsweise weniger als 5 %, mehr bevorzugt weniger als 2 %, des Umfangsmaßes (CM) beträgt.

10. Fahrzeugchassis (12) nach Anspruch 9, wobei sich die Knautschdosenwand (62) von einem Knautschdosenstartabschnitt (64) zu einem Knautschdosenendabschnitt (66) in der Knautschdosenmittellinienerrichtung (CLD) erstreckt, wobei die Knautschdosenwand (62) einen Knautschdosenwandabstand (68) von einem äußeren Abschnitt der Knautschdosenwand (62) zu der Knautschdosenmittellinie (63) in einer Richtung senkrecht zu der Knautschdosenmittellinienerrichtung (CLD) aufweist, wobei für mindestens einen Querschnitt der Knautschdosenwand in einer Ebene, die sich in der Knautschdosenmittellinienerrichtung (63) erstreckt, die Knautschdosenwand (62) einen Satz von Knautschdosenwandkämmen (69) umfasst, umfassend mindestens einen Knautschdosenwandkamm (70, 72), vorzugsweise eine Vielzahl von Knautschdosenwandkämmen (70, 72), wobei jeder Knautschdosenwandkamm (70, 72) in dem Satz von Knautschdosenwandkämmen (69) einen größeren Knautschdosenwandabstand (68) als angrenzende Abschnitte der Knautschdosenwand (62) aufweist, die auf gegenüberliegenden Seiten des Knautschdosenwandkamms (70, 72) in der Knautschdosenmittellinienerrichtung (CLD) angeordnet sind.

11. Fahrzeugchassis (12) nach Anspruch 9 oder 10, wenn abhängig von Anspruch 2, wobei sich das Lastübertragungselement (40) in einer Lastübertragungselementrichtung (TMD) erstreckt, wobei die Lastübertragungselementrichtung (TMD) und die Knautschdosenmittellinienerrichtung (CLD) einen Winkel ausbilden, der kleiner als 10° ist.

12. Fahrzeugchassis (12) nach einem der vorstehenden Ansprüche, wobei ein erster Abschnitt (34') der Verbindungseinrichtung (34) mit dem ersten unteren Batteriepackabschnitt (24) verbunden ist und ein zweiter Abschnitt (34") der Verbindungseinrichtung (34) mit dem zweiten unteren Batteriepackabschnitt (30) verbunden ist.

13. Fahrzeugchassis (12) nach einem der vorstehenden Ansprüche, wobei die Verbindungseinrichtung (34) unterhalb von jedem des ersten Verbindungsabschnitts (22) und des zweiten Verbindungsabschnitts (28) in der Fahrzeugchassisvertikalrichtung (V) angeordnet ist.

14. Fahrzeugchassis (12) nach einem der vorstehenden Ansprüche, umfassend einen Satz von Verbindungseinrichtungen, umfassend mindestens zwei Verbindungseinrichtungen (34, 80), wobei jede Verbindungseinrichtung (34, 80) in dem Satz von Verbindungseinrichtungen nach einem der vorstehenden Ansprüche ausgebildet ist, wobei eine erste Verbindungseinrichtung (34) und eine zweite Verbindungseinrichtung (80) in dem Satz von Verbindungseinrichtungen durch einen Abstand (82) in der Fahrzeugchassislängsrichtung (L) getrennt sind.

15. Fahrzeug (10), umfassend ein Fahrzeugchassis (12) nach einem der vorstehenden Ansprüche.

## Revendications

1. Châssis de véhicule (12) comprenant un premier rail de cadre de châssis (14) et un second rail de cadre de châssis (16),
ledit châssis de véhicule (12) ayant une extension longitudinale de châssis de véhicule dans une direction longitudinale (L) de châssis de véhicule, une extension transversale de châssis de véhicule dans une direction transversale (T) de châssis de véhicule et une extension verticale de châssis de véhicule dans une direction verticale (V) de châssis de véhicule, ladite direction longitudinale (L) de châssis de véhicule correspondant à une direction de déplacement prévue dudit châssis de véhicule (12) lors d'un déplacement en ligne droite, ladite direction verticale (V) de châssis du véhicule correspondant à une direction d'une normale à une surface plane (18) supportant directement ou indirectement ledit châssis de véhicule (12) et ladite direction transversale (T) de châssis de véhicule étant perpendiculaire à chacune de ladite direction longitudinale (L) de châssis de véhicule et de ladite direction verticale (V) de châssis de véhicule, un plan central (CP) s'étend dans ladite direction longitudinale (L) de châssis de véhicule et dans ladite direction verticale (V) de châssis de véhicule, et étant situé dans un centre transversal dudit châssis de véhicule (12), dans lequel ledit premier rail de cadre de châssis (14) et ledit second rail de cadre de châssis (16) sont situés sur des côtés opposés dudit plan central (CP),
ledit châssis de véhicule (12) comprenant un premier bloc-batterie (20) relié à une première portion de liaison (22) dudit premier rail de cadre de châssis (14), moyennant quoi une portion inférieure de premier bloc-batterie (24) dudit premier bloc-batterie (20) est située sous ladite première portion de liaison (22) dans ladite direction verticale (V) de châssis de véhicule ;
ledit châssis de véhicule (12) comprenant un second bloc-batterie (26) relié à une seconde portion de liaison (28) dudit second rail de cadre de châssis (16) moyennant quoi une portion inférieure de second bloc-batterie (30) dudit second bloc-batterie (26) est située sous ladite seconde portion de liaison (28) dans ladite direction verticale (V) de châssis de véhicule ;
ledit châssis de véhicule (12) comprenant un agencement de liaison (34) dans lequel ladite portion inférieure de premier bloc-batterie (24) et ladite portion inférieure de second bloc-batterie (30) sont reliées par l'intermédiaire dudit agencement de liaison (34), ledit agencement de liaison (34) étant situé entre ladite portion inférieure de premier bloc-batterie (24) et ladite portion inférieure de second bloc-batterie (30) dans ladite direction transversale (T) de châssis de véhicule ;
**caractérisé en ce que**
ledit agencement de liaison (34) comprend un ensemble d'éléments absorbant l'énergie (36) comprenant au moins un élément absorbant l'énergie (38, 42), dans lequel chaque élément absorbant l'énergie (38, 42) dans ledit ensemble d'éléments absorbant l'énergie (36) est adapté pour se déformer plastiquement pour permettre de ce fait un déplacement relatif entre la partie inférieure de premier bloc-batterie (24) et ladite partie inférieure de second bloc-batterie (30) dans au moins ladite direction transversale (T) de châssis de véhicule lorsqu'une charge imposée sur ledit élément absorbant l'énergie (38, 42) dans au moins ladite direction transversale (T) de châssis de véhicule est égale ou supérieure à une charge seuil prédéterminée.

2. Châssis de véhicule (12) selon la revendication 1, dans lequel ledit agencement de liaison (34) comprend un élément de transfert de charge (40) relié à au moins un élément absorbant l'énergie (38, 42) dans ledit ensemble d'éléments absorbant l'énergie (36).

3. Châssis de véhicule (12) selon la revendication 2, dans lequel ledit ensemble d'éléments absorbant l'énergie (36) comprend un premier élément absorbant l'énergie (38) et un second élément absorbant l'énergie (42), dans lequel ledit agencement de liaison (34) comprend, dans l'ordre dans ladite direction transversale (T) de châssis de véhicule de ladite portion inférieure de premier bloc-batterie (24) à ladite portion inférieure de second bloc-batterie (30) : ledit premier élément absorbant l'énergie (38), ledit élément de transfert de charge (40) et ledit second élément absorbant l'énergie (40).

4. Châssis de véhicule (12) selon l'une quelconque des revendications 2 à 3, dans lequel ledit élément de transfert de charge (40) a une rigidité d'élément de transfert de charge dans ladite direction transversale (T) de châssis de véhicule et chaque élément absorbant l'énergie (38, 42) dans ledit ensemble d'éléments absorbant l'énergie (36) a une rigidité d'élément absorbant l'énergie dans ladite direction transversale (T) de châssis de véhicule étant plus petite que ladite rigidité d'élément de transfert de charge.

5. Châssis de véhicule (12) selon l'une quelconque des revendications précédentes, dans lequel une distance de premier bloc-batterie (44), étant une plus grande distance dans ladite direction transversale (T) de châssis de véhicule d'une portion dudit premier bloc-batterie (20) audit plan central (CP), est plus grande qu'une distance de première portion de liaison (46), étant une plus grande distance dans ladite direction transversale (T) de châssis de véhicule de ladite première portion de liaison (22) audit plan central (CP).

6. Châssis de véhicule (12) selon l'une quelconque des revendications précédentes, dans lequel une distance de second bloc-batterie (48), qui est une plus grande distance dans ladite direction transversale (T) de châssis de véhicule d'une portion dudit second bloc-batterie (26) audit plan central (CP), est plus grande qu'une distance de seconde portion de liaison (50), qui est une plus grande distance dans ladite direction transversale (T) de châssis de véhicule de ladite seconde portion de liaison (28) audit plan central (CP).

7. Châssis de véhicule (12) selon l'une quelconque des revendications précédentes, dans lequel chaque élément absorbant l'énergie (38, 42) dans ledit ensemble d'éléments absorbant l'énergie (36) comprend ou est constitué par un caisson d'écrasement (52).

8. Châssis de véhicule (12) selon la revendication 7, dans lequel ledit caisson d'écrasement (52) comprend un réseau de cellules creuses (54, 56, 58) séparées par des parois de cellules de caisson d'écrasement (60), de préférence lesdites parois de cellules de caisson d'écrasement (60) forment une structure en nid d'abeille.

9. Châssis de véhicule (12) selon la revendication 7 ou la revendication 8, dans lequel ledit caisson d'écrasement (52) comprend une paroi de caisson d'écrasement (62) renfermant une ligne centrale de caisson d'écrasement (63) s'étendant dans une direction de ligne centrale (CLD) de caisson d'écrasement, ladite paroi de caisson d'écrasement ayant une mesure de circonférence (CM) autour de ladite ligne centrale de caisson d'écrasement et une épaisseur de paroi (CT) de caisson d'écrasement, ladite épaisseur de paroi (CT) de caisson d'écrasement étant inférieure à 10 %, de préférence inférieure à 5 %, plus préférablement inférieure à 2 %, de ladite mesure de circonférence (CM).

10. Châssis de véhicule (12) selon la revendication 9, dans lequel ladite paroi de caisson d'écrasement (62) s'étend d'une portion de départ de caisson d'écrasement (64) à une portion de fin de caisson d'écrasement (66) dans ladite direction de ligne centrale (CLD) de caisson d'écrasement, dans lequel ladite paroi de caisson d'écrasement (62) a une distance de paroi de caisson d'écrasement (68) d'une portion externe de ladite paroi de caisson d'écrasement (62) à ladite ligne centrale de caisson d'écrasement (63) dans une direction perpendiculaire à ladite direction de ligne centrale (CLD) de caisson d'écrasement, dans lequel, pour au moins une section transversale de ladite paroi de caisson d'écrasement dans un plan s'étendant dans ladite direction de ligne centrale de caisson d'écrasement (63), ladite paroi de caisson d'écrasement (62) comprend un ensemble de crêtes de paroi de caisson d'écrasement (69) comprenant au moins une crête de paroi de caisson d'écrasement (70, 72), de préférence une pluralité de crêtes de paroi de caisson d'écrasement (70, 72), chaque crête de paroi de caisson d'écrasement (70, 72) dans ledit ensemble de crêtes de paroi de caisson d'écrasement (69) ayant une distance de paroi de caisson d'écrasement (68) plus grande que des portions adjacentes de ladite paroi de caisson d'écrasement (62) situées sur des côtés opposés de ladite crête de paroi de caisson d'écrasement (70, 72) dans ladite direction de ligne centrale (CLD) de caisson d'écrasement.

11. Châssis de véhicule (12) selon la revendication 9 ou la revendication 10, lorsqu'elle dépend de la revendication 2, dans lequel ledit élément de transfert de charge (40) s'étend dans une direction d'élément de transfert de charge (TMD), ladite direction d'élément de transfert de charge (TMD) et ladite direction de ligne centrale (CLD) de caisson d'écrasement forment un angle qui est inférieur à 10°.

12. Châssis de véhicule (12) selon l'une quelconque des revendications précédentes, dans lequel une première portion (34') dudit agencement de liaison (34) est reliée à ladite portion inférieure de premier bloc-batterie (24) et une seconde portion (34") dudit agencement de liaison (34) est reliée à ladite portion inférieure de second bloc-batterie (30).

13. Châssis de véhicule (12) selon l'une quelconque des revendications précédentes, dans lequel ledit agencement de liaison (34) est situé sous chacune de ladite première portion de liaison (22) et de ladite seconde portion de liaison (28) dans ladite direction verticale (V) de châssis de véhicule.

14. Châssis de véhicule (12) selon l'une quelconque des revendications précédentes, comprenant un ensemble d'agencements de liaison comprenant au moins deux agencements de liaison (34, 80), chaque agencement de liaison (34, 80) dans ledit ensemble d'agencements de liaison étant conforme à l'une quelconque des revendications précédentes, dans lequel un premier agencement de liaison (34) et un second agencement de liaison (80) dans ledit ensemble d'agencements de liaison sont séparés d'une distance (82) dans ladite direction longitudinale (L) de châssis de véhicule.

15. Véhicule (10) comprenant un châssis de véhicule (12) selon l'une quelconque des revendications précédentes.
